# EUROPEAN PATENT APPLICATION

(11) **EP 4 847 795 A1**
(43) Date of publication of application: **02.12.2026**
(21) Application number: 25179090.3
(22) Date of filing: 27.05.2025
(51) Int. Cl.: F16D 55/226, F16D 65/00, F16D 65/18, F16D 55/00, F16D 65/02, F16D 121/04

(54) **AN INSIDE-OUT BRAKE FOR A VEHICLE**

(71) Applicant: ZF CV Systems Europe BV, 1170 Brüssel (BE)
(72) Inventor: STRZALA, Wieslaw, 46-220 Byczyna (PL); COHRS, Jan, 29649 Wietzendorf (DE); SPÜHLER, Stefan, 88677 Markdorf (DE)
(74) Representative: Rabe, Dirk-Heinrich

(57) **Abstract**

The invention relates to an inside-out brake (1) for a vehicle, said brake comprising a brake carrier (3), a rotor assembly (5) and a brake caliper assembly (3), wherein the brake caliper assembly (3) is configured to mount to the brake carrier, and wherein the brake caliper assembly (3) comprises an outboard brake pad and an inboard brake pad, said brake pads being configured to engage the rotor assembly on opposite sides thereof, a brake mechanism (19) configured to actuate the brake pads such as to engage the rotor assembly and to apply a braking force thereto, a caliper body (5) configured to support the brake pads and receive a reaction force corresponding to the brake force, and a caliper housing (6) that accommodates the brake mechanism (19) therein. The invention suggests that the housing (6) comprises a dedicated enclosure (7) that forms the caliper housing (6) together with the caliper body (5) and is secured, preferably releasably, to the caliper body (5).

## Description

The invention relates to an inside-out brake for a vehicle, said brake comprising a brake carrier, a rotor assembly and a brake caliper assembly, wherein the brake caliper assembly is configured to mount to the brake carrier, and wherein the brake caliper assembly comprises an outboard brake pad and an inboard brake pad, said brake pads being configured to engage the rotor assembly on opposite sides thereof, a brake mechanism configured to actuate the brake pads such as to engage the rotor assembly and to apply a braking force thereto, a caliper body configured to support the brake pads and receive a reaction force corresponding to the brake force, and a caliper housing that accommodates the brake mechanism therein.

An inside-out brake, such as for example shown in FR 1 341 744 A, DE 34 46 437 C2 or DE 39 31 868 A1, is generally defined by a caliper which embraces the rotor, in particular, the disk element, from radially inwards such that the caliper envelopes the rotor from the inside rather than straddling the rotor from the outside, as it would be shown in conventional brakes. The caliper is usually spaced apart from the rotating wheel parts, such as the disk element and its associated fixed parts, and the rigid axis of the car.

Due to the increasing demand for meeting evolving environmental standards, brake manufacturers are forced to contribute innovative brake components for vehicles. To meet environmental standards, resource efficiency is an important factor, wherein resource efficiency covers the manufacturing process of the brake as well as its product lifetime and emissions.

Typically, the caliper housing is an integral part of the caliper body which is arranged at an inboard shoulder of the caliper body. The manufacturing of the caliper housing presume chip removal processes at difficult to reach regions of the caliper. This in the end leads to high manufacturing and material costs.

In view thereof, it was an object of the invention to provide an inside-out brake that overcomes the disadvantages of the prior art as much as possible. In particular, it was an object of the invention to improve the resource efficiency in manufacturing processes.

The invention attains this object by suggesting an inside-out brake of the initially mentioned type, wherein the housing comprises a dedicated enclosure that forms the caliper housing together with the caliper body and is secured, preferably releasably, to the caliper body.

The invention is based on the realization that a dedicated enclosure allows different manufacturing processes of the caliper body and the use of different materials for the caliper housing and the caliper body. According to manufacturing processes, it becomes possible to save resources by the need of less chip removal during manufacturing. Regarding the use of different materials for the caliper housing and the caliper body, it seems obvious to use thinner wall thicknesses for the caliper housing and also to use materials which offer an appropriate stiffness but also less weight.

In a preferred embodiment, the caliper body comprises a radially extending outboard shoulder configured to support the outboard brake pad, a radially extending inboard shoulder configured to support the inboard brake pad, and an axially extending caliper arm connecting the inboard shoulder to the outboard shoulder, wherein the enclosure is secured to one of the inboard shoulder side and the caliper arm while remaining uncoupled from the respective other. Support in this sense is understood to encompass direct as well as intermediate support such that in the end, the reacting forces resulting from applying braking force to the brake pads are taken up by the shoulders. In particular, the inboard shoulder may support the inboard brake pad directly or indirectly, for example by supporting the brake mechanism and a piston which is a part of the brake mechanism, and the piston supports the inboard brake pad. The outboard shoulder, the inboard shoulder and the caliper arm are forced receiving parts. Each part is configured to receive forces which arise during braking. By securing the enclosure to only one of the inboard shoulder side and the caliper arm, there are no tensions present in the enclosure during braking. Thus, the enclosure can be manufactured of lighter and thinner materials and alternative manufacturing processes are possible.

Preferably, the enclosure is at least partially made of sheet metal material. Using sheet metal material for the enclosure serves the possibility of recasting manufacturing techniques for shaping the enclosure. In the case of mass production of enclosures, recasting manufacturing techniques lead to a more cost-effective production. Another important aspect of recasting manufacturing techniques is a possible thin wall thickness.

Also, resources may be saved due to less chip removal manufacturing process for the caliper body. All in all, there is a weight reduction for the caliper assembly which is followed by a reduction of fuel consumption. Higher environmental standards can be fulfilled by vehicles using the suggested caliper assembly.

In alternative preferred embodiments, the enclosure is at least partially made of die cast material, preferably from aluminium or an aluminium alloy.

In a further preferred embodiment, the caliper body comprises at least one, preferably two or more reinforcing elements extending axially along a radial inner periphery of the caliper arm and/or at least one reinforcing element extending axially along a radial outer periphery of the caliper arm. The radial inner periphery of the caliper arm is the innermost contour of the caliper and is facing the rotor axis in a radial direction. The radial outer periphery is the outermost contour of the caliper arm in radial direction. Mentioned reinforcements are adding stiffness to the reduced caliper body according to the invention. Due to the connection of the enclosure to only one force receiving part another way for receiving torsional forces is necessary, which arise during braking. One preferred way of realizing the reinforcing elements is to provide reinforcing protrusions such as ribs or convexly shaped material thickenings.

Preferably, the caliper body comprises at least one strengthening reinforcement extending perpendicularly to the rotor axis of the brake. This reinforcement offers additional stiffness for receiving forces in a perpendicular direction. In particular, this perpendicular reinforcement receives torsional forces during braking.

In a further preferred embodiment, the strengthening reinforcement, which extends perpendicularly to the rotor axis is arranged on the radial inner periphery of the caliper arm preferably extending between two axially extending strengthening reinforcements and/or extending along the inboard shoulder. The arrangement of reinforcements builds a force receiving grid around the caliper body. Therefore, the caliper body can be reduced in weight, wherein still offering an adequate stiffness for receiving brake forces.

In a further preferred embodiment, the enclosure comprises one or more guiding surfaces configured to slidingly guide movement of the brake mechanism. The brake mechanism is arranged in the housing formed by the caliper body and the enclosure.

The housing receives the brake mechanism, wherein the brake mechanism is connected partly to the enclosure and partly to the caliper body. The guiding surfaces serve as a reference surface between the enclosure and the caliper body. A correct alignment of the enclosure and the caliper body is necessary to ensure the functionality of the brake mechanism.

Preferably, the enclosure comprises a through-opening in a rotor-facing wall, the through-opening being configured to receive a piston; wherein the piston is configured to engage and move the inboard brake pad which is mounted to the piston towards the rotor assembly. The rotor-facing wall is preferably opposite the mating mounting surface. The piston is moving in an axial direction parallel to the rotor axis transmitting a translational force to the inner brake pad. Therefore, it is necessary that the piston can move freely towards the enclosure. At its car side the piston is guided by the enclosure and mounted to the caliper such that the brake mechanism moves the piston through the enclosure towards the inner brake pad. The piston may be part of a clamping unit that in turn forms part of the brake mechanism.

In a further preferred embodiment, the enclosure comprises one or more positioning elements configured to engage the brake mechanism inside the enclosure, wherein preferably, the positioning elements are recesses extending axially in the rotor-facing wall towards the rotor assembly. The positioning elements configured to receive a mounting interface, e.g. a terminal winding, of return springs that are provided such as to bias the brake mechanism towards a release position.

In a further preferred embodiment, the enclosure is sealingly mounted to the caliper body. The sealing protects the brake mechanism against environmental and braking particles. This increases the lifetime of the brake mechanism and therefore contributes to resource efficiency.

Preferably, the inboard shoulder comprises additional side panels spaced apart from each other embracing the enclosure and configured to strengthen the inboard shoulder. The side panels serve an additional shelter for the enclosure against particles from the outside of the brake. Particles may reach the enclosure with high speeds and might cause damage to the thin walls due to high impact forces. The side panels catch the damaging particles before reaching the enclosure. Another advantage of the side panels is that they improve the stiffness of the caliper body.

In a further preferred embodiment, the outboard shoulder comprises cavities arranged at its outer periphery configured to reduce the weight of the caliper body. Additionally to a reduction of weight, cavities improve thermal conduction of the braking heat which reduces the thermal impact on the caliper material. This, again, improves the stiffness and the stability of the caliper body.

In a further preferred embodiment, thickenings are arranged at the caliper arm; wherein the thickenings are arranged opposite of each other and are a maximum distance from the rotor axis. The thickenings improve the stiffness in the transition area of the caliper arm, where the enclosure receiving part of the caliper arm and the rotor receiving part of the caliper arm meet.

In a further embodiment, the rotor assembly comprises a rotor cover that encloses at least the inboard brake pad and is arranged adjacent the housing, and a housing seal is arranged between the rotor cover and the housing, the seal being configured to retain particles exiting the rotor cover towards the housing. By implementing the seal, the passageway for particles to travel between the inboard brake pad and the environment which would be present on prior art systems, may be effectively closed off. Therefore, brake particle emissions are reduced further.

Preferably, the housing seal is secured to the housing, in particular to the enclosure. A sealing connection between the housing and the rotor cover blocks the particle emissions from the brake to the environment. In one embodiment, the housing seal can be pressed into a fixation groove that is positioned at the wheel side of the enclosure and surrounds at least a part of the circumference of the enclosure. In an alternative embodiment, the housing seal can be mounted to the housing with fixation bolts. Therefor the housing seal comprises straps that cover fixation holes arranged at the wheel side of the enclosure at its circumference.

The invention will herein after be described with reference to a preferred embodiment and the attached figures, wherein:
- FIG. 1: shows an inside-out brake according to a preferred embodiment in a cross-sectional view;
- FIG. 2: shows a caliper assembly of the brake according to FIG. 1 in a perspective view;
- FIG. 3: shows a caliper of the caliper assembly of FIG. 2, seen along the rotor axis;
- FIG. 4: shows the caliper assembly of FIGS. 1 to 3 in another perspective view;
- FIGS. 5a, 5b: show an enclosure of the caliper assembly of FIGS. 1 to 4 in detail
- FIGS. 6a, 6b: show another embodiment of the enclosure of the caliper assembly of FIGS. 1 to 4 in detail,
- FIGS. 7a, 7b: show a further embodiment of the enclosure of the caliper assembly of FIGS. 1 to 4 in detail.

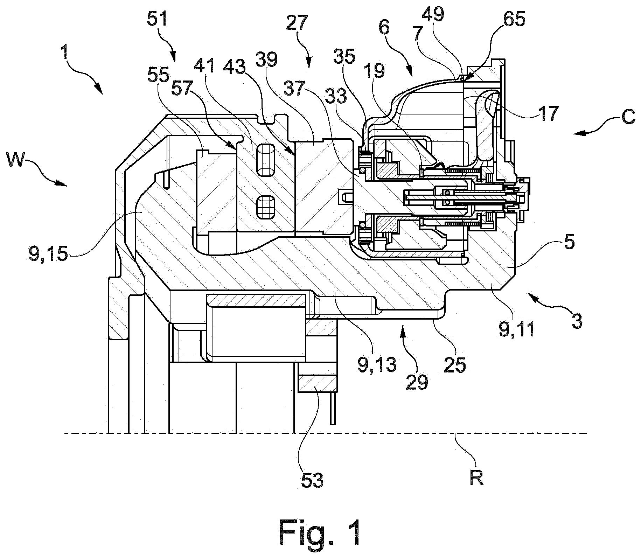

FIG. 1 shows a cross-sectional view of an inside-out brake 1 (herein after: brake 1). The brake 1 comprises a brake carrier 53, a rotor assembly 51 and a brake caliper assembly 3. The brake caliper assembly 3 is slidingly mounted to the brake carrier 53. Further, the brake caliper assembly 3 comprises a caliper body 5, wherein the caliper body 5 comprises an outboard shoulder 15, a caliper arm 13 and an inboard shoulder 11. The outboard shoulder 15, the caliper arm 13 and the inboard shoulder 11 are so-called force receiving parts 9, which are receiving forces during braking.

The outboard shoulder 15 supports the outboard brake pad 55 and is arranged at a wheel-side W of the caliper assembly. The outboard brake pad 55 engages with the outboard friction surface 57 of the disk element 41, which rotates between the outboard brake pad 55 and an inboard brake pad 39.

The disk element 41 is part of the rotor assembly 51, which is mounted to the wheel via a hub. The hub is not shown in FIG. 1.

The inboard brake pad 39 engages with the inboard friction surface 43 of the disk element 41. A piston 37 in configured to move the inboard brake pad 39 axially along the rotor axis R towards the disk element 41. The piston 37 is guided through a through-opening 33 in a rotor-facing wall 35 of an enclosure 7. The enclosure 7 is arranged at a radial outer periphery 27 of the caliper assembly 3.

The enclosure 7 and the inboard shoulder 11 are forming a housing 6. The housing 6 receives a brake mechanism 19, which comprises the piston 37. The enclosure 7 is sealingly mounted to the inboard shoulder 11 using a sealing 49. The inboard shoulder 11 of the caliper body 5 is arranged at the car side C of the caliper assembly 3 and comprises a mating mounting surface 65 which engages with the open mounting side 17 of the enclosure 7.

The inboard shoulder 11 is arranged at the car side C of the caliper arm 13, which comprises a third reinforcement 25 at its radial inner periphery 29 at its car side, where the inboard shoulder 11 is arranged.

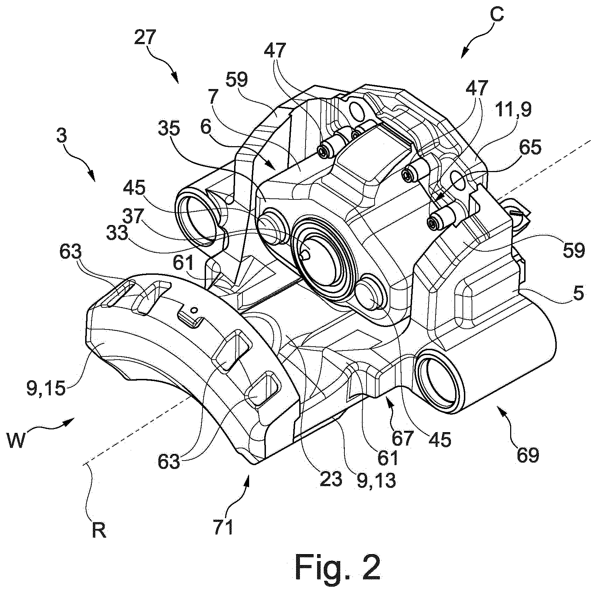

FIG. 2 shows a perspective view of the caliper assembly 3. The caliper assembly 3 is arranged radially outwards of the axis of rotation R. At the wheel side W of the caliper body 5, the outboard shoulder 15 is arranged. The outboard shoulder 15 comprises several cavities 63 which are arranged at the radial outer periphery 27 of the outboard shoulder 15. The caliper arm 13 comprises a reinforcement 23, which is a second reinforcement 23, and extends axially along a radial outer periphery 27 of the caliper arm 13. Also, the caliper arm 13 comprises thickenings 61. The thickenings 61 are arranged opposite of each other and spaced apart from the second reinforcement 23. In an axial direction, the thickenings 61 are arranged in a transition area 67 of the caliper arm 13. The transition area 67 marks the area, where the enclosure receiving part 69 meets the rotor receiving part 71 of the caliper arm 13.

The enclosure receiving part 69 of the caliper arm 13 is arranged at the car side C of the caliper arm 13 and comprises side panels 59. The side panels 59 embrace the housing 6 which comprises the enclosure 7. The enclosure 7 is mounted to the inboard shoulder 11 using fixation means 47. Fixation means may be screws or rivets or any suitable connecting piece. The enclosure 7 is mounted to the inboard shoulder 11 at a mating mounting surface 65 and comprises positioning elements 45, which are arranged at a rotor-facing wall 35. The rotor-facing wall 35 of the enclosure 7 comprises a through-opening 33, which receives the piston 37.

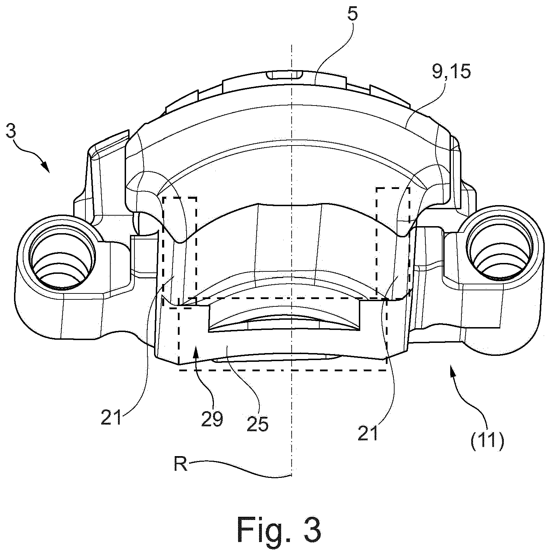

FIG. 3 shows the caliper assembly 3 from the rotor axis R. At the radial inner periphery 29 of the inboard shoulder 11 of the caliper body 5, reinforcements 21, which are first reinforcements 21, are arranged. The first reinforcements 21 extend axially along the radial inner periphery 29 of the caliper body 5. The third reinforcement 25 extends perpendicular to the rotor axis R at the radial inner periphery 29 of the inboard shoulder 11.

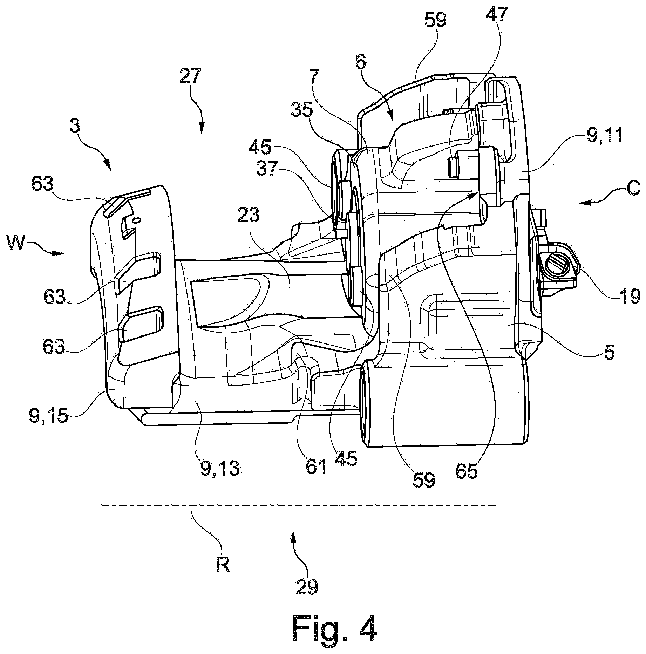

FIG. 4 shows the caliper assembly 3 in another perspective view. The same execution example as FIG. 2 is shown from another perspective. Therefore, only difference to FIG. 2 are described and the description of FIG.2 is included herein. FIG. 4 offers a detailed view of the second reinforcement 23. The reinforcement 23 is arranged parallel to the rotor axis R and extends axially along the radial outer periphery 27 of the caliper arm 13. The reinforcement 23 stops before reaching the outboard shoulder 15.

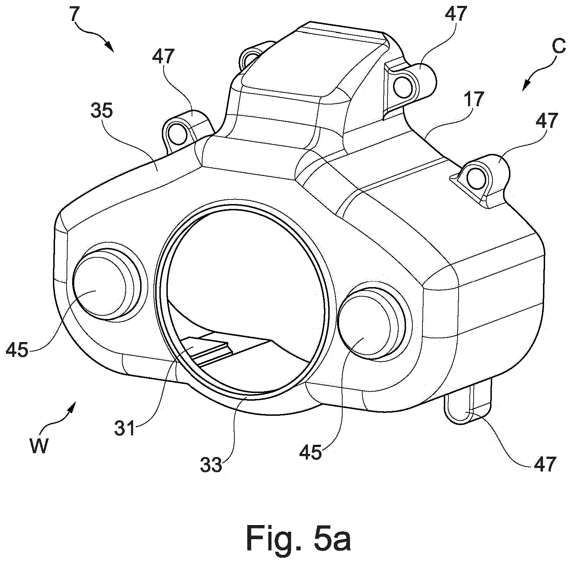

FIG. 5a shows the enclosure 7 from the wheel side W. At the wheel side W of the enclosure 7, the rotor-facing wall 35 is arranged. The rotor-facing wall 35 comprises positioning elements 45 and a through-opening 33. The positioning elements 45 extend axially from the rotor-facing wall 35 towards the rotor assembly 51 (not shown in FIG. 5a) and have a cylindrical shape, which is only one possible example of implementation. The through-opening 33 has a circular shape. Inside the enclosure 7, guiding surfaces 31 are arranged. At the car side of the enclosure 7, an open mounting side 17 is arranged and, distributed at a circumferential wall of the enclosure 7, fixation means 47 are positioned.

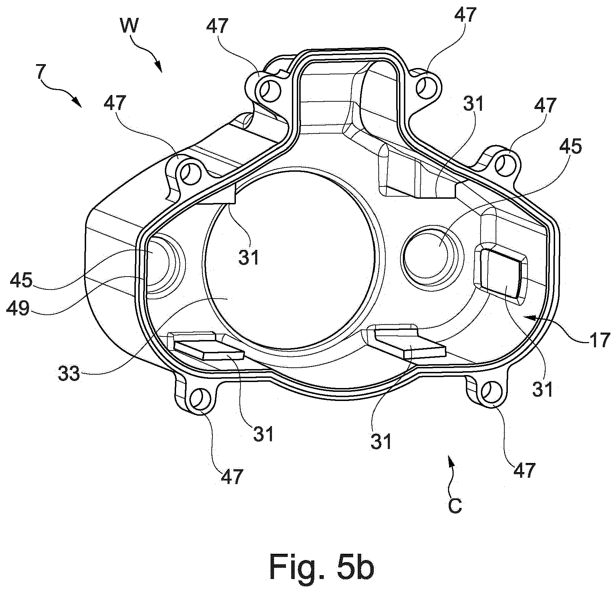

FIG. 5b shows the enclosure 7 from the car side C. Additional to the elements described for FIG. 5a, an arrangement of guiding surfaces 31 is shown. The guiding surfaces 31 are positioned opposite each other relative to an axis of the through-opening 33 for receiving the piston 37. At the open mounting side 17 is a sealing 49 protect the brake mechanism against particles from the brake and the environment by a closed connection of the open mounting side 17 to the mating mounting surface 65.

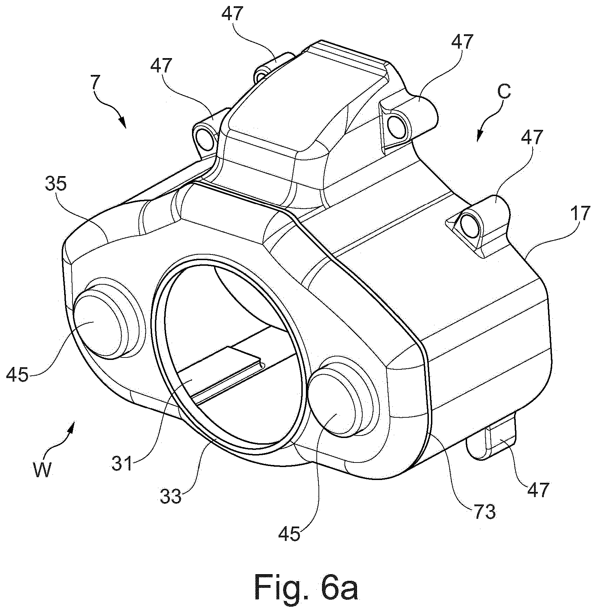

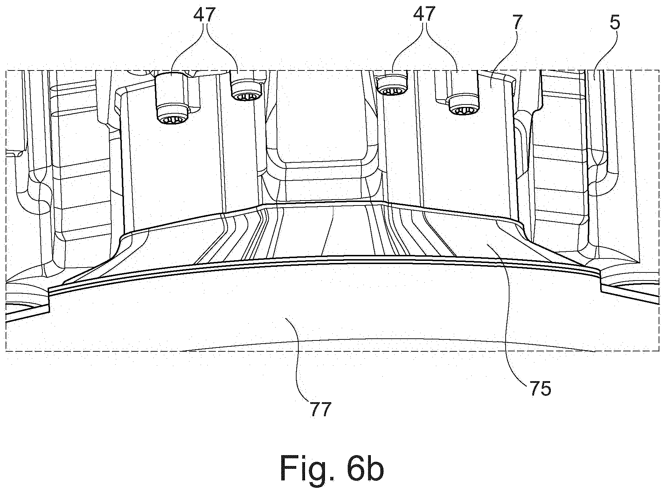

FIG. 6a shows the enclosure 7 from the wheel side W. Additionally to the elements described for FIG. 5a, a fixation groove 73 is shown. The fixation groove 73 is positioned at the wheel side W of the enclosure 7 and surrounds at least a part of the circumference of the enclosure 7. For installation, the housing seal 75 is pressed into the fixation groove 73 as shown in FIG. 6b.

FIG. 6b shows a detailed top view of the mounted enclosure 7 according to the embodiment of FIG. 6a. The caliper body 5 comprises the enclosure 7 at the car side C of the brake 1. A rotor cover 77 is mounted to the brake 1 adjacent to the enclosure 7. A housing seal 75 is mounted between the rotor cover 77 and the enclosure 7 and effective to close any gap therebetween. The housing seal 75 is secured to the enclosure 7 by being pressed into the fixation groove 73 arranged at the enclosure 7, cf. FIG. 6a.

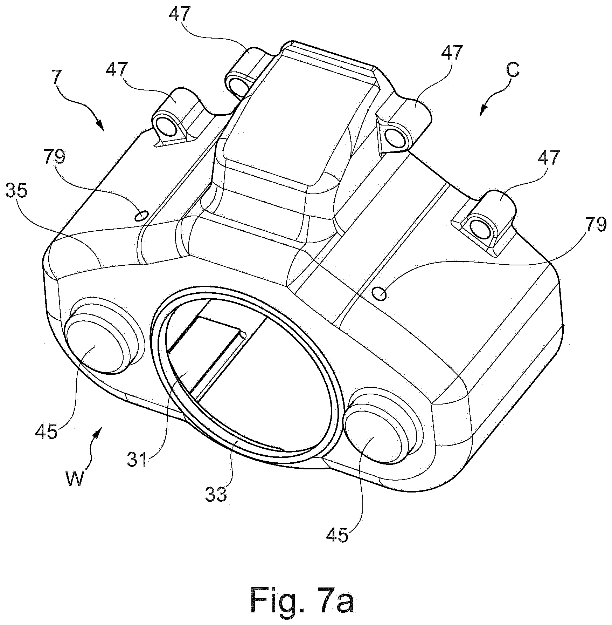

FIG. 7a shows the enclosure 7 from the wheel side W. Additional to the elements described for FIG. 5a, fixation holes 79 are shown. The fixation holes 79 are positioned at the wheel side W of the enclosure 7 at its circumference. In the shown embodiment the fixation holes 79 are spaced apart from each other with the same distance to axis of the through-opening 33.

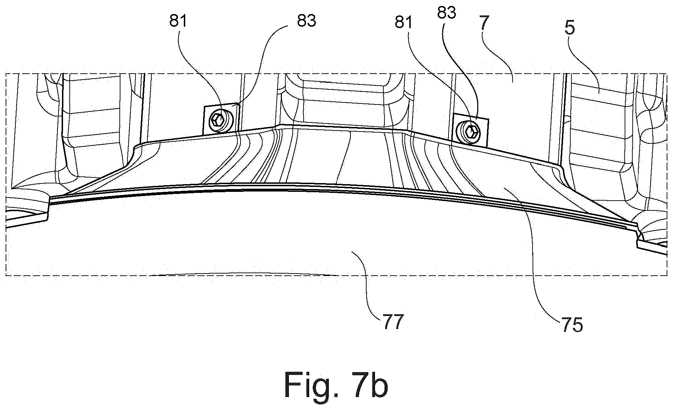

FIG. 7b shows a detailed top view of the mounted enclosure 7 according to the embodiment of FIG. 7a. The caliper body 5 comprises the enclosure 7 at the car side C of the brake 1. The rotor cover 77 is arranged at the wheel side W of the brake 1 and extends to the enclosure 7. A housing seal 75 is mounted between the rotor cover 77 and the enclosure 7. The housing seal 75 comprises straps 83 covering the fixation holes 79 (not shown in FIG. 7b). The straps 83 are fixed with fixation bolts 81 at the fixation holes 79.

### List of reference signs (part of the description)

- 1: inside-out brake
- 3: caliper assembly
- 5: caliper body
- 6: housing
- 7: enclosure
- 9: force receiving part
- 11: inboard shoulder
- 13: caliper arm
- 15: outboard shoulder
- 17: open mounting side
- 19: brake mechanism
- 21: first reinforcement
- 23: second reinforcement
- 25: third reinforcement
- 27: radial outer periphery
- 29: radial inner periphery
- 31: guiding surface
- 33: through-opening
- 35: rotor-facing wall
- 37: piston
- 39: inboard brake pad
- 41: disk element
- 43: inboard friction surface
- 45: positioning elements
- 47: fixation means
- 49: sealing
- 51: rotor assembly
- 53: carrier
- 55: outboard brake pad
- 57: outboard friction surface
- 59: side panel
- 61: thickening
- 63: cavity
- 65: mating mounting surface
- 67: transition area
- 69: enclosure receiving part
- 71: rotor receiving part
- 73: fixation groove
- 75: housing seal
- 77: rotor cover
- 79: fixation hole
- 81: fixation bolt
- 83: strap car side
- R: rotor axis
- W: wheel side

## Claims

1. An inside-out brake (1) for a vehicle, said brake comprising a brake carrier (3), a rotor assembly (51) and a brake caliper assembly (3),
wherein the brake caliper assembly (3) is configured to mount to the brake carrier, and wherein the brake caliper assembly (3) comprises
- an outboard brake pad and an inboard brake pad, said brake pads being configured to engage the rotor assembly on opposite sides thereof,
- a brake mechanism (19) configured to actuate the brake pads such as to engage the rotor assembly and to apply a braking force thereto,
- a caliper body (5) configured to support the brake pads and receive a reaction force corresponding to the brake force, and
- a caliper housing (6) that accommodates the brake mechanism (19) therein,
**characterized in that** the housing (6) comprises a dedicated enclosure (7) that forms the caliper housing (6) together with the caliper body (5) and is secured, preferably releasably, to the caliper body (5).

2. Inside-out brake (1) for a vehicle according to claim 1,
**characterized in that** the caliper body (5) comprises a radially extending outboard shoulder (15) configured to support the outboard brake pad (55), a radially extending inboard shoulder (11) configured to support the inboard brake pad (39), and an axially extending caliper arm (13) connecting the inboard shoulder (11) to the outboard shoulder, wherein the enclosure (7) is secured to one of the inboard shoulder side (11) and the caliper arm (13) while remaining uncoupled from the respective other.

3. Inside-out brake (1) for a vehicle according to claim 1 or 2,
**characterized in that** the enclosure (7) is at least partially made of sheet metal material.

4. Inside-out brake (1) for a vehicle according to any one of the preceding claims, **characterized in that** the caliper body (5) comprises at least one, preferably two or more reinforcing elements (21) extending axially along a radial inner periphery of the caliper arm (13) and/or at least one reinforcing element (23) extending axially along a radial outer periphery of the caliper arm (13).

5. Inside-out brake (1) for a vehicle according to any one of the preceding claims, **characterized in that** the caliper body (5) comprises at least one reinforcing element (25) extending perpendicularly to the rotor axis (R) of the brake (1).

6. Inside-out brake (1) for a vehicle according to claim 5, **characterized in that** the reinforcing element (25) which extends perpendicularly to the rotor axis (R) is arranged on the radial inner periphery (29) of the caliper arm (13) preferably extending between two axially extending reinforcing elements (23) and/or extending along the inboard shoulder (11).

7. Inside-out brake (1) for a vehicle according to any one of the preceding claims, **characterized in that** the enclosure (7) comprises one or more guiding surfaces (31) configured to slidingly guide movement of the brake mechanism (19).

8. Inside-out brake (1) for a vehicle according to any one of the preceding claims, **characterized in that** enclosure (7) comprises an through-opening (33) in a rotor-facing wall (35), the through-opening being configured to receive a piston (37) of the brake mechanism (19); wherein the piston (37) is configured to engage and move the inboard brake pad (39) which is mounted to the piston (37) towards the rotor assembly (51).

9. Inside-out brake (1) for a vehicle according to any one of the preceding claims, **characterized in that** the enclosure (7) comprises one or more positioning elements (45) configured to engage the brake mechanism (19) inside the enclosure (7), wherein preferably, the positioning elements (45) are recesses extending axially in the rotor-facing wall (35) towards the rotor assembly (51).

10. Inside-out brake (1) for a vehicle according to any one of the preceding claims, **characterized in that** the enclosure (7) is sealingly mounted to the caliper body (5).

11. Inside-out brake (1) according to any one of the preceding claims,
**characterized in that** the inboard shoulder (11) comprises additional side panels (59) spaced apart from each other embracing the enclosure (7) and configured to strengthen the inboard shoulder (11).

12. Inside-out brake (1) according to any one of the preceding claims,
**characterized in that** the outboard shoulder (15) comprises cavities (63) arranged at its outer periphery configured to reduce the weight of the caliper body (5).

13. Inside-out brake (1) according to any one of the preceding claims,
**characterized in that** ribs or thickenings (61) are arranged at the caliper arm (13); wherein the ribs or thickenings (61) are arranged opposite of each other and at a maximum distance from the rotor axis (R).

14. Inside-out brake (1) according to any one of the preceding claims,
**characterized in that** the rotor assembly (51) comprises a rotor cover (77) that encloses at least the inboard brake pad (39) and is arranged adjacent the housing (6), and a housing seal (75) is arranged between the rotor cover (77) and the housing (6), the seal (75) being configured to retain particles exiting the rotor cover (77) towards the housing (6).

15. Inside-out brake (1) according to any one of the preceding claims,
**characterized in that** the housing seal (75) is mounted to the housing (6), in particular to the enclosure (7).
